# EUROPÄISCHE PATENTANMELDUNG

(11) **EP 4 653 163 A2**
(43) Veröffentlichungstag der Anmeldung: **26.11.2025**
(21) Anmeldenummer: 25201646.4
(22) Anmeldetag: 29.10.2018
(51) Int. Cl.: B27B 9/00

(54) **HANDWERKZEUGMASCHINE**

(30) Priorität: 13.12.2017 DE 102017222662
(62) Teilanmeldung aus: 18795996.0
(71) Anmelder: Robert Bosch GmbH, 70442 Stuttgart (DE)
(72) Erfinder: Maute, Joerg, 71069 Sindelfingen (DE); Ziegler, Thomas, 71711 Steinheim An Der Murr (DE); Wiker, Juergen, 70374 Stuttgart (DE); Indino, Ruggero, 3526 Miskolc (HU)

(57) **Zusammenfassung**

Die Erfindung bezieht sich auf eine Handwerkzeugmaschine, insbesondere eine Handkreissäge, mit einem, insbesondere ein Kreissägeblatt lösbar aufnehmbaren, Sägeblattaufnahmebereich, welcher in zumindest einem Betriebszustand der Handwerkzeugmaschine eine Rotationsebene des Kreissägeblattes aufweist, mit einer von einem Antriebsgehäuse umgebenen Antriebseinheit und mit einer an dem Antriebsgehäuse angeordneten Energiespeichereinheit, insbesondere einem Akkupack, zur elektrischen Energieversorgung der Antriebseinheit.

Es wird vorgeschlagen, dass die Antriebseinheit und die Energiespeichereinheit, insbesondere der Akkupack, parallel zu dem Sägeblattaufnahmebereich bzw. der Rotationsebene angeordnet sind.

## Beschreibung

Die Erfindung bezieht sich auf eine Handwerkzeugmaschine nach dem Oberbegriff des Anspruchs 1.

### Stand der Technik

Es sind bereits Handwerkzeugmaschinen mit einer mittels einem Akku betriebenen Antriebseinheit bekannt.

### Offenbarung der Erfindung

Der Erfindung liegt die Aufgabe zugrunde, mit einfachen konstruktiven Maßnahmen eine Handwerkzeugmaschine zu verbessern.

Die Aufgabe wird gelöst mit einer Handwerkzeugmaschine, insbesondere einer Handkreissäge, mit einem, insbesondere ein Kreissägeblatt lösbar aufnehmbaren, Sägeblattaufnahmebereich, welcher dazu vorgesehen ist, in zumindest einem Betriebszustand der Handwerkzeugmaschine eine Rotationsebene des Kreissägeblattes zu bilden, mit einer von einem Antriebsgehäuse umgebenen Antriebseinheit und mit einer an dem Antriebsgehäuse angeordneten Energiespeichereinheit, insbesondere einem Akkupack, zur elektrischen Energieversorgung der Antriebseinheit.

Erfindungsgemäß sind die Antriebseinheit und die Energiespeichereinheit, insbesondere der Akkupack, parallel zu dem Sägeblattaufnahmebereich bzw. der Rotationsebene angeordnet.

Durch die erfindungsgemäße Ausbildung einer Handwerkzeugmaschine, kann auf besonders vorteilhafte Weise eine kompakte Handwerkzeugmaschine gebildet sein. Die Handwerkzeugmaschine kann besonders schmal ausgeführt sein um einem Bediener der Handwerkzeugmaschine möglichst eine große Flexibilität bei einer Bedienung der Handwerkzeugmaschine zu ermöglichen. Zudem kann ein Schwerpunkt abgesenkt werden, um einem Bediener einen besonders vorteilhaften Betrieb der Handwerkzeugmaschine zu ermöglichen.

Aufgrund der parallelen Anordnung der Antriebseinheit und der Energiespeichereinheit zu dem Sägeblattaufnahmebereich bzw. der Rotationsebene des Sägeblattbereichs kann der Schwerpunkt der Handwerkzeugmaschine besonders vorteilhaft optimiert werden.

Dabei kann sowohl die Antriebseinheit als auch die Energiespeichereinheit mit deren minimalen Erstreckungen zueinander angeordnet sein, um eine besonders kompakte Handwerkzeugmaschine auszubilden.

Sowohl die Antriebseinheit als auch die Energiespeichereinheit sind parallel zum Sägeblattaufnahmebereich bzw. zur Rotationsebene angeordnet. Insbesondere die Antriebsachse der Antriebseinheit ist parallel zum Sägeblattaufnahmebereich bzw. zur Rotationsebene angeordnet. Insbesondere die Antriebsachse der Antriebseinheit ist parallel zur Energiespeichereinheit angeordnet.

Die Handwerkzeugmaschine kann als eine Tauchkreissäge ausgebildet sein.

Die Antriebseinheit kann eine Antriebsebene aufweisen, welche parallel zur Rotationsebene des Kreissägeblattes angeordnet ist. Die Antriebseinheit kann eine Antriebsachse aufweisen, welche sich entlang der Antriebsebene erstreckt. Die Antriebseinheit kann eine Haupterstreckung aufweisen, welche parallel zu einer Haupterstreckung einer Energiespeichereinheit angeordnet ist.

Die Antriebseinheit kann einen bürstenlosen Antriebsmotor aufweisen.

Die Energiespeichereinheit weist eine Speicherebene auf, welche durch eine Haupterstreckung und eine sich quer, insbesondere orthogonal, zur Haupterstreckung erstreckende Quererstreckung gebildet ist.

Insbesondere sind die Speicherebene und die Antriebsebene parallel zur Rotationsebene angeordnet. Die Antriebsebene ist zwischen der Speicherebene und der Rotationsebene angeordnet.

Die beschriebenen Ebenen können an dem Gewichtsschwerpunkt des entsprechenden Bauteils angeordnet sein. Die Ebenen können dazu vorgesehen sein, eine Anordnung der entsprechenden Bauteile, insbesondere entlang der Abtriebsachse Ab zueinander zu beschreiben.

Unter "parallel" soll in diesem Zusammenhang auch eine beispielsweise aufgrund von Fertigungsbedingungen abweichende Winkelabweichung, insbesondere von bis zu 10°, vorzugsweise von bis zu 5°, bevorzugt von bis zu 3°, besonders bevorzugt von bis zu 1°, von einer parallelen Anordnung verstanden werden.

Die Energiespeichereinheit kann als ein Akkupack ausgebildet sein.

Die Antriebseinheit kann die Energiespeichereinheit direkt kontaktieren, wodurch beispielsweise eine Länge der elektrischen Leitungen, welche die Energiespeichereinheit mit der Antriebseinheit kontaktieren, optimiert wird.

Die Energiespeichereinheit ist insbesondere dazu vorgesehen, eine Energie, insbesondere eine elektrische Energie, zu speichern und beispielsweise an die Antriebseinheit abzugeben, um die Antriebseinheit mit elektrischer Energie zu versorgen. Die Energiespeichereinheit kann als ein Akkupack ausgebildet sein. Die Energiespeichereinheit kann mehrere Zellen, insbesondere Batteriezellen, aufweisen.

Der Sägeblattaufnahmebereich kann im Wesentlichen von einem Schutzhaubengehäuse begrenzt sein. Der Sägeblattaufnahmebereich kann im Wesentlichen als ein Hohlraum gebildet sein, welcher dazu vorgesehen ist, das Kreissägeblatt aufzunehmen. Der Sägeblattaufnahmebereich kann durch eine Abtriebswelle begrenzt sein. Die Abtriebswelle kann dazu vorgesehen sein, eine Bewegung von der Antriebseinheit auf das Kreissägeblatt zu übertragen. Die Abtriebswelle kann dazu vorgesehen sein, das Kreissägeblatt drehfest aufzunehmen. Die Abtriebswelle kann dazu vorgesehen sein, in zumindest einem Betriebszustand durch das Kreissägeblatt zu greifen. Der Sägeblattaufnahmebereich kann von einem Schutzhaubengehäuse umgeben sein. Das Schutzhaubengehäuse kann den Sägeblattaufnahmebereich begrenzen. Das Schutzhaubengehäuse kann das Kreissägeblatt in zumindest einer Ebene, insbesondere in zumindest zwei Ebenen, um 360° umgeben. Das Schutzhaubengehäuse kann eine maximale Erstreckung aufweisen, welche sich im Wesentlichen entlang der Rotationsebene des Kreissägeblattes erstreckt.

Das Schutzhaubengehäuse kann zumindest zweiteilig ausgebildet sein. Ein erstes Schutzhaubengehäuse kann gegenüber einem zweiten Schutzhaubengehäuse beweglich gelagert sein. Das erste Schutzhaubengehäuse kann gegenüber dem zweiten Schutzhaubengehäuse, insbesondere mittels eines Federelements, federgelagert sein. Das Federelement kann als eine Schenkelfeder ausgebildet sein.

Die Rotationsebene kann durch die Rotation des Kreissägeblattes gebildet sein. Die Rotationsebene kann sich auf einen Rotationskörper des Kreissägeblattes begrenzen.

Das Kreissägeblatt kann einen Durchmesser von bis auf eine Fertigungstoleranz genau 140 mm aufweisen. Eine maximal zu erzielende Schnitttiefe der erfindungsgemäßen Handwerkzeugmaschine kann bei 53 mm liegen. Durch die Verwendung eines kleineren Sägeblatts (Durchmesser von 140 mm, anstatt von 165 mm) kann eine Bauhöhe der Handwerkzeugmaschine zusätzlich reduziert werden.

Die Unteransprüche geben weitere zweckmäßige Weiterbildungen der erfindungsgemäßen Handwerkzeugmaschine an.

Es kann zweckmäßig sein, dass die Handwerkzeugmaschine eine als Winkelgetriebe ausgebildete erste Getriebeeinheit aufweist, welche eine

Antriebsbewegung der Antriebseinheit auf das Kreissägeblatt überträgt. Ferner kann es zweckmäßig sein, dass die erste Getriebeeinheit ein Kronenradgetriebe, insbesondere mit einem Zylinderrad und einem Kronenrad, oder ein Kegelradgetriebe, insbesondere mit einem Kegelrad und einem Kegelritzel, aufweist. Die Antriebsachse kann eine Antriebswelle aufweisen, welche eine als geometrisch ausgebildete Antriebsachse aufweist. Das Winkelgetriebe kann dazu vorgesehen sein, die Antriebseinheit, insbesondere die Antriebsachse bzw. der Antriebswelle der Antriebseinheit, angewinkelt, insbesondere parallel, zum Sägeblattaufnahmebereich bzw. zur Rotationsebenen zu lagern. Die erste Getriebeeinheit kann eine erste Getriebestufe bilden. Das Winkelgetriebe kann eine besonders kompakte Handwerkzeugmaschine bilden. Zudem kann erreicht werden, dass der Schwerpunkt der Handwerkzeugmaschine näher am Kreissägeblatt liegt. Durch die erste Getriebeeinheit kann eine besonders tiefe Schnitttiefe erreicht werden.

Die Antriebswelle kann zumindest abschnittsweise über der Abtriebswelle angeordnet sein, wodurch beispielsweise die Schnitttiefe vergrößert werden kann.

Des Weiteren kann es zweckmäßig sein, dass die Energiespeichereinheit, insbesondere der Akkupack, gegenüber dem Sägeblattaufnahmebereich bzw. der Rotationsebene weiter beabstandet ist als die Antriebseinheit. Die Antriebseinheit kann zumindest im Wesentlichen zwischen dem Sägeaufnahmebereich und der Energiespeichereinheit angeordnet sein.

Ferner kann es zweckmäßig sein, dass die Handwerkzeugmaschine ein Handgriffelement aufweist, welches zwischen der Antriebseinheit und/oder dem Sägeblattaufnahmebereich bzw. der Rotationsebene und der Energiespeichereinheit angeordnet ist. Das Handgriffelement kann zwischen der Antriebseinheit und dem Sägeblattaufnahmebereich bzw. der Rotationsebene einerseits und zwischen der Energiespeichereinheit andererseits angeordnet sein. Das Handgriffelement kann zwischen dem Sägeblattaufnahmebereich bzw. der Rotationsebene und der Energiespeichereinheit angeordnet sein. Hierdurch kann eine besonders einfache Handhabung der Handwerkzeugmaschine erreicht werden. Insbesondere kann dadurch erreicht werden, dass ein Schwerpunkt der Handwerkzeugmaschine im Bereich des Handgriffelements liegt, indem die Energiespeichereinheit ein Gewichtsmoment der Antriebseinheit und des Sägeblattaufnahmebereichs ausgleicht.

Weiterhin kann es zweckmäßig sein, dass eine senkrecht zum Sägeblattaufnahmebereich bzw. der Rotationsebene ausgerichtete Linie die Energiespeichereinheit und die Antriebseinheit schneidet. Die Linie kann senkrecht zur Abtriebswelle, insbesondere zur Abtriebsachse, ausgebildet sein. Die Lotlinie kann im geometrischen Sinn eine Lotgerade bilden, welche senkrecht auf dem Sägeblattaufnahmebereich bzw. der Rotationsebene des Kreissägeblattes steht. Weiterhin kann es zweckmäßig sein, dass eine senkrecht zum Sägeblattaufnahmebereich bzw. der Rotationsebene angeordnete Ebene die Energiespeichereinheit und die Antriebseinheit schneidet. Die Energiespeichereinheit und die Antriebseinheit können jeweils eine Haupterstreckung aufweisen, welche parallel zur Ebene angeordnet sind. Hierdurch kann die Handwerkzeugmaschine besonders kompakt ausgebildet sein.

Es wird vorgeschlagen, dass das Antriebsgehäuse eine Energiespeichereinheit-Aufnahmebereich, insbesondere einen Akkupack-Aufnahmebereich, aufweist, welcher derart angeordnet ist, dass der Energiespeichereinheit-Aufnahmebereich in einer zum Handgriffelement weisenden Richtung und/oder von einer zum Werkstück weisenden Richtung mit dem Antriebsgehäuse verbindbar ist. Der Energiespeichereinheit-Aufnahmebereich kann parallel zu der Antriebseinheit, insbesondere der Antriebsachse, angeordnet sein und dazu vorgesehen sein, die Energiespeichereinheit in einer Einschubrichtung parallel zur Antriebsachse aufzunehmen. Der Energiespeichereinheit-Aufnahmebereich ist derart ausgestaltet, dass die Energiespeichereinheit in einer von dem Handgriffelement abgewandten Richtung aus dem Energiespeichereinheit-Aufnahmebereich entnommen werden kann. Dadurch können insbesondere Energiespeichereinheiten mit größeren Abmessungen mittels dem Energiespeichereinheit-Aufnahmebereich aufgenommen werden. Hierdurch kann die Energiespeichereinheit besonders einfach und zuverlässig mit der Antriebseinheit bzw. mit dem Antriebsgehäuse verbunden werden.

Es wird ferner vorgeschlagen, dass die Antriebseinheit, insbesondere die Antriebsachse, gegenüber einer Auflageeinheit, insbesondere einer Auflageebene der Auflageeinheit, der Handwerkzeugmaschine angewinkelt ist. Die Antriebseinheit, insbesondere die Antriebsachse, kann gegenüber der Auflageeinheit, insbesondere der Auflageebene der Auflageeinheit, einen Winkel bildet, welcher größer ist als 20°, insbesondere größer als 30°, vorzugsweise größer als 40°, ist. Die Antriebseinheit, insbesondere die Antriebsachse, kann gegenüber der Auflageeinheit, insbesondere der Auflageebene der Auflageeinheit, einen Winkel bildet, welcher kleiner ist als 90°, insbesondere 70°, vorzugsweise 60°, ist. Hierdurch kann die Antriebseinheit, insbesondere bei einer Schwenkbewegung bzw. einer Tauchbewegung des Kreissägeblattes, bei Einhaltung einer kompakten Ausführung eine besonders große Schnitttiefe des Kreissägeblattes erreichen.

Die Antriebseinheit und/oder das Kreissägeblatt können derart gegenüber dem ersten Schutzhaubengehäuse und/oder dem zweiten Schutzhaubengehäuse beweglich gelagert sein, das ein Tauchschnitt mittels dem Kreissägeblatt ausführbar ist. Dabei kann die Handwerkzeugmaschine eine Tauchvorrichtung aufweisen. Die Tauchvorrichtung kann eine Tauchachse aufweisen. Die Tauchvorrichtung bzw. die Tauchachse kann ein Federelement aufweisen. Das Federelement kann dazu vorgesehen sein, eine Rückstellbewegung der Tauchvorrichtung bei einer Tauchbewegung zumindest des Kreissägeblattes zu ermöglichen. Das Federelement kann eine Schenkelfeder aufweisen oder daraus gebildet sein. Das Federelement kann an der Tauchachse angeordnet sein. Die Tauchachse kann dazu vorgesehen sein, das Kreissägeblatt gegenüber der Auflageeinheit drehbar zu lagern.

Es wird weiter vorgeschlagen, dass die Handwerkzeugmaschine einen Schwerpunkt aufweist, welcher in zumindest einem Betriebszustand unterhalb einer das Kreissägeblatt antreibenden Abtriebswelle liegt. Der Schwerpunkt kann zwischen der Abtriebswelle und der Auflageeinheit angeordnet sein. Unter dem Schwerpunkt soll in diesen Zusammenhang ein Massen- bzw. Gewichtsschwerpunkt, insbesondere der Handwerkzeugmaschine, verstanden werden. Hierdurch kann eine Verkippung der Handwerkzeugmaschine beispielsweise beim Gehrungsschneiden vermieden werden.

Die Auflageeinheit kann eine Auflageplatte aufweisen. Die Auflageeinheit ist dazu vorgesehen, auf ein Werkstück aufgelegt zu werden. Die Auflageeinheit kann eine Führungsvorrichtung aufweisen, welche dazu vorgesehen ist, die Handwerkzeugmaschine beispielsweise auf bzw. entlang von einem Werkstück zu führen. Die Führungseinheit kann in zumindest einem Betriebszustand dazu vorgesehen sein, die Handwerkzeugmaschine, insbesondere die Auflageeinheit, insbesondere mittels Führungsschienen oder Führungslatten, zu führen, insbesondere eine Parallelführung zu bilden. Die Auflageeinheit kann eine Erstreckung der Handwerkzeugmaschine in zumindest einem Zustand begrenzen.

Es kann zweckmäßig sein, dass die Handwerkzeugmaschine eine Elektronikeinheit aufweist. Die Elektronikeinheit kann unmittelbar, benachbart zu der Energiespeichereinheit, insbesondere dem Akkupack, und/oder der Antriebseinheit angeordnet sein. Die Elektronikeinheit kann eine Bedien- und/oder Anzeigeeinheit (HMI) aufweisen. Die Elektronikeinheit kann unterhalb der Abtriebswelle angeordnet sein. Die Elektronikeinheit kann beabstandet zur Energiespeichereinheit und/oder zur Antriebseinheit angeordnet sein. Dadurch kann ein Schwerpunkt besonders vorteilhaft nach unten verlagert werden, wodurch ein Verkippen der Handwerkzeugmaschine minimiert bzw. verhindert wird.

Es kann ferner zweckmäßig sein, dass die Handwerkzeugmaschine eine als Stirnradgetriebe ausgebildete zweite Getriebeeinheit aufweist, welche eine Antriebsbewegung der Antriebseinheit auf das Kreissägeblatt überträgt. Die zweite Getriebeeinheit kann eine zweite Getriebestufe bilden. Bei Verwendung einer zweiten Getriebeeinheit kann eine Zwischenwelle vorgesehen sein, welche eine Bewegung der ersten Getriebestufe von der Antriebseinheit auf die zweite Getriebestufe überträgt. Hierdurch kann beispielsweise die erste Getriebeeinheit mit einer geringeren Umsetzung ausgebildet sein.

Die Erfindung bezieht sich ferner, auf ein Maschinensystem umfassend einen eine Handwerkzeugmaschine, insbesondere eine Tauchkreissäge, und ein zum Antrieb mit der Handwerkzeugmaschine vorgesehenes Kreissägeblatt.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:
- Fig. 1: eine perspektivische Ansicht einer erfindungsgemäßen Handwerkzeugmaschine,

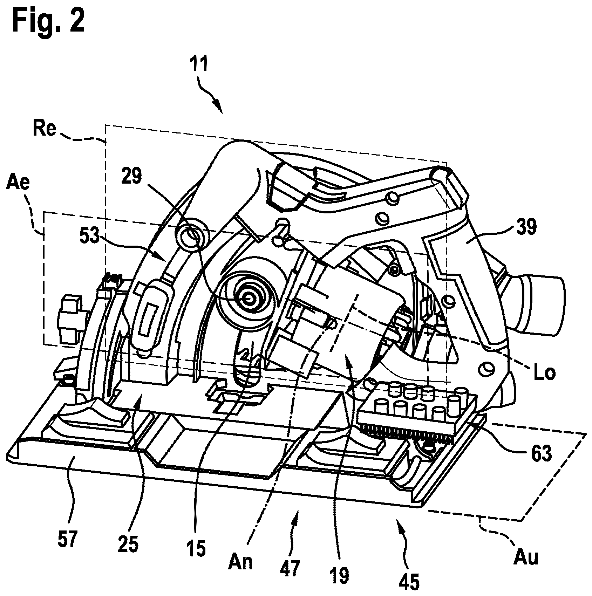

- Fig. 2: eine weitere perspektivische Ansicht der erfindungsgemäßen Handwerkzeugmaschine der Fig. 1,
- Fig. 3: eine perspektivische Ansicht einer Antriebseinheit mit einem Kreissägeblatt,
- Fig. 4: eine weitere perspektivische Ansicht der Antriebseinheit aus Fig 3,
- Fig. 5: eine perspektivische Ansicht einer Getriebeinheit,
- Fig. 6: eine Schnittansicht A-A durch die Handwerkzeugmaschine aus Fig. 1,
- Fig. 7: eine perspektivische Schnittansicht B-B durch die Handwerkzeugmaschine aus Fig. 1,
- Fig. 8: eine weitere Ansicht auf die Handwerkzeugmaschine aus Fig. 7,
- Fig. 9: eine weitere Ansicht auf die Handwerkzeugmaschine aus Fig. 1 und
- Fig. 10: eine weitere Ansicht auf die Handwerkzeugmaschine aus Fig. 1.

In den folgenden Figuren sind gleiche Bauteile mit den gleichen Bezugszeichen versehen.

Die Figuren beziehen sich jeweils auf eine Handwerkzeugmaschine 11 zur lösbar verbindbaren Aufnahme eines Kreissägeblatt 15es.

Als Handwerkzeugmaschine 11 eignet sich sowohl eine stationäre Werkzeugmaschine wie beispielsweise eine Tischkreissäge ähnlich den Anmeldungen DE 102010042016 oder US 2062969 A, als auch eine nichtstationäre Werkzeugmaschine wie beispielsweise eine Handkreissäge ähnlich der Anmeldung DE 3740200 A1.

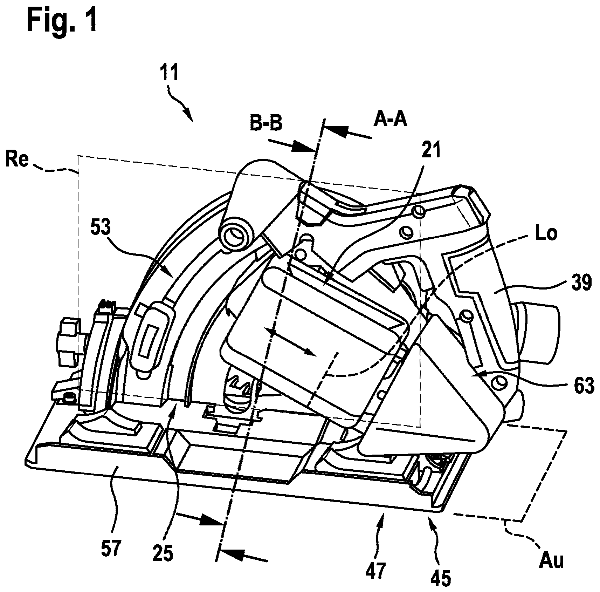

Die erfindungsgemäße Handwerkzeugmaschine 11 gemäß Fig. 1, ist als eine Handkreissäge ausgebildet. Die Handkreissäge ist als eine Tauchkreissäge ausgebildet. Die Tauchkreissäge ist dazu vorgesehen, einen Tauchschnitt in ein zu bearbeitendes Werkstück einzubringen.

Die Handwerkzeugmaschine 11 ist in ist mit einem Kreissägeblatt 15 lösbar verbindbar. Die Handwerkzeugmaschine 11 weist einen lösbar aufnehmbaren Sägeblattaufnahmebereich 13 auf, welcher dazu vorgesehen ist, in zumindest einem Betriebszustand der Handwerkzeugmaschine 11 eine Rotationsebene Re des Kreissägeblattes 15 zu bilden.

Die Rotationsebene Re kann insbesondere dadurch gebildet werden, dass das Kreissägeblatt 15 in einem mit der Handwerkzeugmaschine 11 bzw. dem Sägeblattaufnahmebereich 13 aufgenommenen Zustand betrieben wird und mittels der Rotation eine Rotationsebene Re bildet.

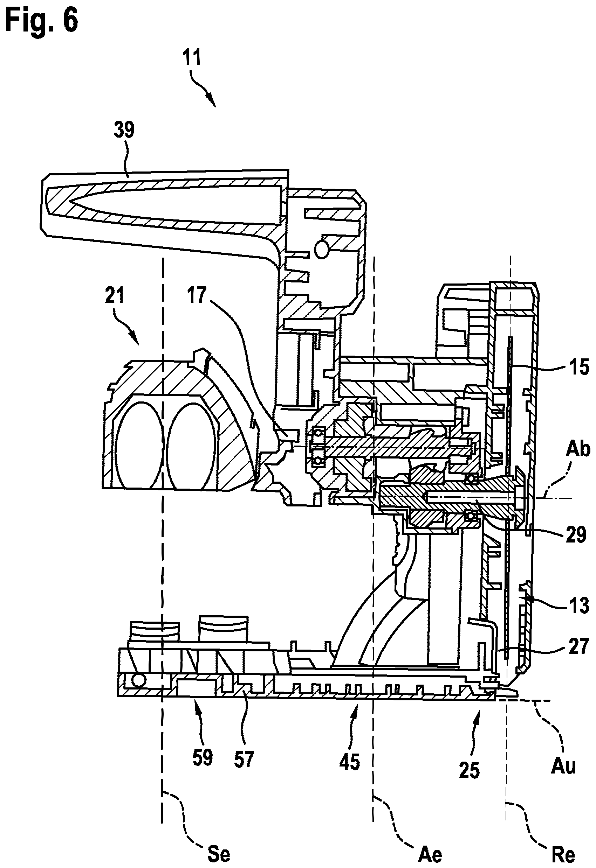

Die Rotationsebene Re kann insbesondere eine sich zu einer Abtriebsachse Ab orthogonal erstreckende Ebene ausgebildet sein (Fig. 6).

Die Handwerkzeugmaschine 11 weist eine von einem Antriebsgehäuse 17 umgebene Antriebseinheit 19 auf und eine an einem Antriebsgehäuse 17 der Antriebseinheit 19 angeordnete Energiespeichereinheit 21 auf. Die Energiespeichereinheit 21 ist dazu vorgesehen, zumindest die Antriebseinheit 19 und/oder weitere Bauteile der Handwerkzeugmaschine 11 mit elektrischer Energie zu versorgen. Die Energiespeichereinheit 21 ist als eine Akkupack 21 ausgebildet. Der Akkupack 21 weist mehrere Akkuzellen auf, welche dazu ausgebildet sind, die wiederaufladbar elektrische Energie aufzunehmen, zu speichern und abzugeben.

Die Antriebseinheit 19 und der Akkupack 21 sind parallel zu dem Sägeblattaufnahmebereich 13 bzw. zu der Rotationsebene Re angeordnet.

Dabei weist die Antriebseinheit 19 eine Antriebsachse An auf, welche parallel zu dem Sägeblattaufnahmebereich 13 bzw. zu der Rotationsebene Re angeordnet ist.

Die Antriebseinheit 19 weist eine durch einen Massenschwerpunkt der Antriebseinheit 19 verlaufende Antriebsebene Ae auf. Die Antriebseinheit 19 erstreckt sich entlang einer Antriebsachse An der Antriebseinheit 19. Die Antriebsebene Ae ist parallel zur Rotationsebene Re des Kreissägeblattes 15 angeordnet. Die Antriebseinheit 19 weist eine Antriebsachse An auf, welche sich entlang der Antriebsebene Ae erstreckt.

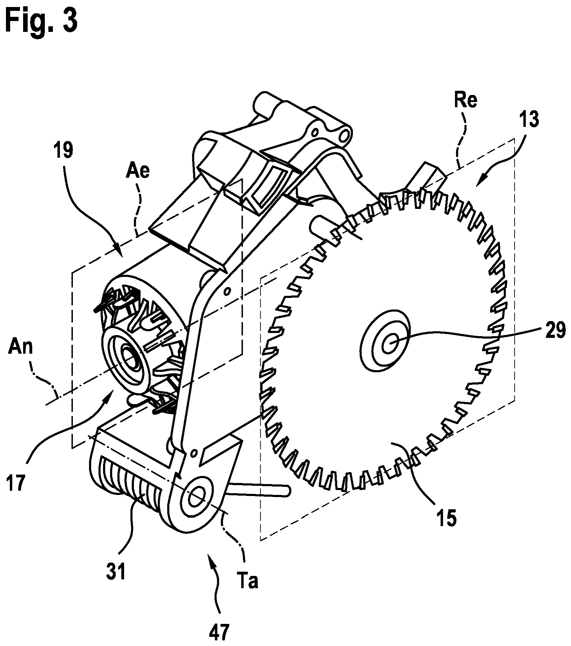

Der Akkupack 21 weist eine durch einen Massenschwerpunkt des Akkupacks 21 verlaufende Speicherebene Se auf, welche durch eine Haupterstreckung und eine sich orthogonal zur Haupterstreckung erstreckende Quererstreckung gebildet ist. Die Haupterstreckung der 21 verläuft entlang der Antriebsachse An (Fig. 3, 4, 5).

Die Antriebsebene Ae ist durch eine Haupterstreckung und eine sich orthogonal zur Haupterstreckung erstreckende Quererstreckung gebildet. Die Haupterstreckung der Antriebsachse An ist parallel zur Antriebsachse An.

Die Haupterstreckung der Antriebseinheit 19 ist parallel zu einer Haupterstreckung des Akkupacks 21 angeordnet. Die Antriebseinheit 19 kann eine quer zur Haupterstreckung verlaufende Quererstreckung aufweisen, welche parallel zur Quererstreckung des Akkupacks 21 angeordnet ist. Die Haupt- und die Quererstreckung bilden die rechteckförmige Form des Akkupacks 21 (Fig. 1).

Die Antriebseinheit 19 weist einen bürstenlosen Antriebsmotor auf.

Die Speicherebene Se und die Antriebsebene Ae sind parallel zur Rotationsebene Re angeordnet. Die Antriebsebene Ae ist zwischen der Speicherebene Se und der Rotationsebene Re angeordnet.

Die Antriebseinheit 19 kontaktiert die Energiespeichereinheit 21 direkt, wodurch beispielsweise eine Länge der elektrischen Leitungen 23, welche die Energiespeichereinheit 21 mit der Antriebseinheit 19 kontaktieren, optimiert wird.

Der Sägeblattaufnahmebereich 13 ist im Wesentlichen von einem Schutzhaubengehäuse 25 begrenzt. Der Sägeblattaufnahmebereich 13 ist im Wesentlichen als ein Hohlraum 27 gebildet, welcher dazu vorgesehen ist, das Kreissägeblatt 15 aufzunehmen (Fig. 6). Der Sägeblattaufnahmebereich 13 ist in radialer Richtung zu einer Abtriebswelle 29 durch die Abtriebswelle 29 begrenzt. Die Abtriebswelle 29 ist dazu vorgesehen, eine Bewegung von der Antriebseinheit 19 auf das Kreissägeblatt 15 zu übertragen. Die Abtriebswelle 29 ist dazu vorgesehen, das Kreissägeblatt 15 drehfest aufzunehmen. Die Abtriebswelle 29 ist dazu vorgesehen sein, in zumindest einem Betriebszustand durch das Kreissägeblatt 15 zu greifen und das Kreissägeblatt 15 zu halten. Der Sägeblattaufnahmebereich 13 ist von einem Schutzhaubengehäuse 25 umgeben. Das Schutzhaubengehäuse 25 begrenzt den Sägeblattaufnahmebereich 13. Das Schutzhaubengehäuse 25 umgibt das Kreissägeblatt 15 in einem Betriebszustand in zumindest einer Ebene um 360°. Das Schutzhaubengehäuse 25 weist eine maximale Erstreckung auf, welche sich im Wesentlichen entlang der Rotationsebene Re des Kreissägeblattes 15 erstreckt.

Das Schutzhaubengehäuse 25 ist zweiteilig ausgebildet. Ein erstes Schutzhaubengehäuse 25 kann gegenüber einem zweiten Schutzhaubengehäuse 25 beweglich gelagert sein. Das erste Schutzhaubengehäuse 25 kann gegenüber dem zweiten Schutzhaubengehäuse 25 mittels eines Federelements federgelagert sein. Das Federelement kann als eine Schenkelfeder (nicht gezeigt) ausgebildet sein.

Das Kreissägeblatt 15 weist einen Durchmesser von bis auf eine Fertigungstoleranz genau 140 mm auf.

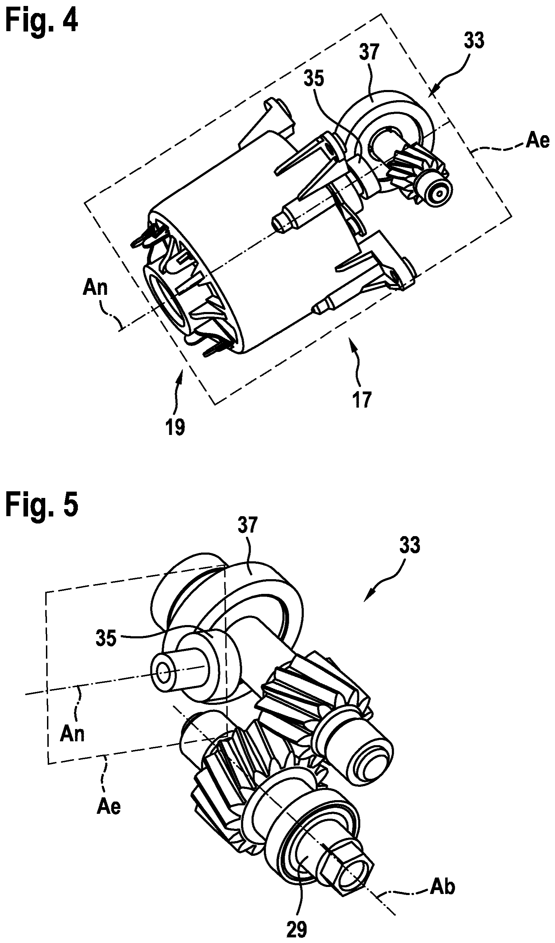

Die Handwerkzeugmaschine 11 weist eine als Winkelgetriebe 33 ausgebildete erste Getriebeeinheit 33 auf, welche eine Antriebsbewegung der Antriebseinheit 19 auf das Kreissägeblatt 15 überträgt. Die erste Getriebeeinheit 33 weist ein ein Zylinderrad 35 und ein Kronenrad 37 aufweisendes Kronenradgetriebe 33 auf (Fig. 4, Fig. 5). In einer alternativen Ausführungsform weist die erste Getriebeeinheit 33 ein Kegelradgetriebe mit einem Kegelrad und einem Kegelritzel auf. Das Winkelgetriebe 33 ist dazu vorgesehen, die Antriebsachse An der Antriebseinheit 19 parallel zur Rotationsebene Re zu lagern. Die Antriebsachse An ist als eine geometrische Antriebsachse An ausgebildet.

Der Akkupack 21 ist gegenüber dem Sägeblattaufnahmebereich 13 bzw. der Rotationsebene Re weiter beabstandet als die Antriebseinheit 19. Die Antriebseinheit 19 kann zumindest im Wesentlichen zwischen dem Sägeaufnahmebereich bzw. der Rotationsebene Re und dem Akkupack 21 angeordnet sein.

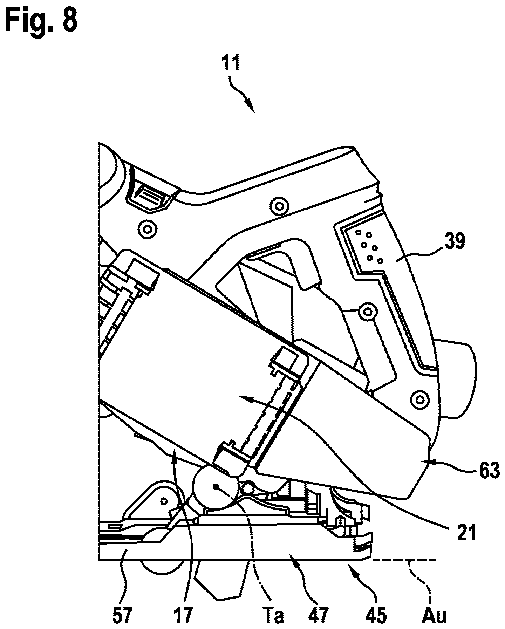

Die Handwerkzeugmaschine 11 weist ein Handgriffelement 39 auf, welches zwischen dem Sägeblattaufnahmebereich 13 bzw. der Rotationsebene Re und dem Akkupack 21 angeordnet ist (Fig. 8). Das Handgriffelement 39 ist zwischen der Antriebsachse An der Antriebseinheit 19 und dem Sägeblattaufnahmebereich 13 bzw. der Rotationsebene Re einerseits und zwischen dem Akkupack 21 andererseits angeordnet (Fig. 6). Das Handgriffelement 39 ist zwischen der Rotationsebene Re und Antriebsebene Ae einerseits und der Speicherebene Se andererseits angeordnet.

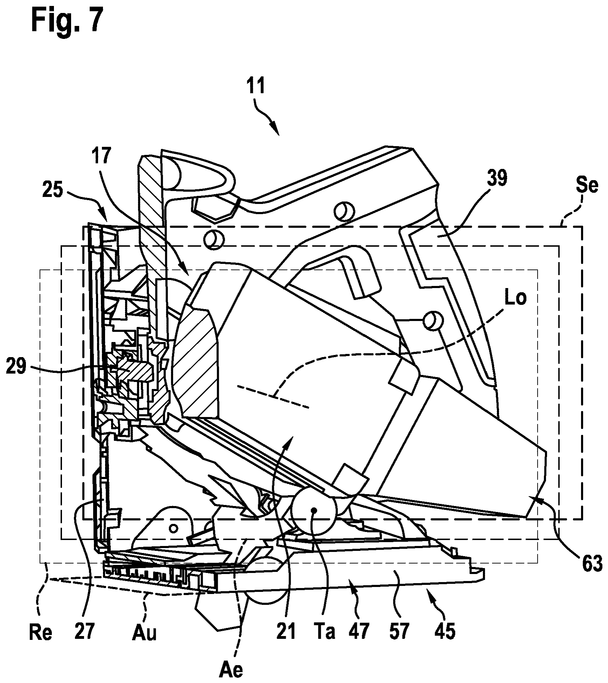

Fig. 7 zeigt eine senkrecht zum Sägeblattaufnahmebereich 13 bzw. der Rotationsebene Re ausgerichtete Lotlinie Lo, welche die Energiespeichereinheit 21 und die Antriebseinheit 19 schneidet. Die Lotlinie Lo ist parallel zur Abtriebswelle 29, insbesondere zur Abtriebsachse Ab, ausgerichtet. Die Lotlinie Lo bildet im geometrischen Sinn eine Lotgerade, welche senkrecht auf dem Sägeblattaufnahmebereich 13 bzw. der Rotationsebene Re des Kreissägeblattes 15 steht. Weiterhin schneidet eine senkrecht zum Sägeblattaufnahmebereich 13 bzw. der Rotationsebene Re angeordnete Ebene den Akkupack 21 und die Antriebseinheit 19.

Die Ebenen (Speicherebene Se, Antriebsebene Ae, Rotationsebene Re) sind orthogonal zur Abtriebsachse Ab angeordnet (Fig. 6, 7).

Das Antriebsgehäuse 17 weist einen Akkupack-Aufnahmebereich 41 auf, welcher derart angeordnet ist, dass der Akkupack-Aufnahmebereich 41 in einer zum Handgriffelement 39 weisenden Richtung und von einer zum Werkstück weisenden Richtung mit dem Antriebsgehäuse 17 verbindbar ist. Der Akkupack-Aufnahmebereich 41 ist parallel zu der Antriebsachse An angeordnet. Der Akkupack-Aufnahmebereich 41 ist dazu vorgesehen, den Akkupack 21 in einer Einschubrichtung parallel zur Antriebsachse An aufzunehmen. Der Akkupack-Aufnahmebereich 41 ist derart ausgestaltet, dass der Akkupack 21 in einer von dem Handgriffelement 39 abgewandten Richtung aus dem Akkupack-Aufnahmebereich 41 entnehmbar ist. Das Antriebsgehäuse 17 weist zwei Führungselemente 43 auf, welche den Akkupack-Aufnahmebereich 41 bilden. Die Führungselemente 43 führen den Akkupack 21 in eine zur Aufnahme des Akkupacks an der Handwerkzeugmaschine 11 vorgesehene Position. Die Führungselemente 43 erstrecken sich parallel zur Antriebsachse An. Der Akkupack-Aufnahmebereich 41 weist ferner eine elektrische Schnittstelle 44 auf, welche dazu vorgesehen ist, einen elektrischen Kontakt mit dem Akkupack 21 zu bilden.

Der Akkupack 21 weist eine quer, insbesondere orthogonal, zur Haupterstreckung und zur Quererstreckung erstreckende Tiefenerstreckung auf. Die Tiefenerstreckung ist durch die elektrische Schnittstelle 44 begrenzt.

Die Antriebsachse An ist oberhalb der Abtriebsachse Ab angeordnet, sodass ein Tauchschnitt besonders tief erfolgen kann, ohne dass die Antriebseinheit 19 eine Tiefe des Tauchschnitts begrenzt.

Die Antriebsachse An ist gegenüber einer Auflageeinheit 45 bzw. einer Auflageebene Au der Auflageeinheit 45 der Handwerkzeugmaschine 11 angewinkelt. Die Antriebsachse An bildet in einem Betriebszustand gegenüber der Auflageebene Au der Auflageeinheit 45 einen Winkel, welcher größer ist als 30° und kleiner ist als 60°.

Das Schutzhaubengehäuse 25 ist mittels dem Federelement 31 gegenüber der Auflageeinheit 45 federgelagert (Fig. 3).

Die Antriebseinheit 19 und das Kreissägeblatt 15 sind derart gegenüber dem ersten Schutzhaubengehäuse 25 beweglich gelagert sein, das ein Tauchschnitt mittels dem Kreissägeblatt 15 ausführbar ist. Hierbei weist die Handwerkzeugmaschine 11 eine Tauchvorrichtung 47 auf. Die Tauchvorrichtung 47 weist eine Tauchachse Ta auf. Die Tauchvorrichtung 47 weist eine Führungsvorrichtung 51 auf, welche dazu vorgesehen ist, die Abtriebswelle 29 entlang einer Führungsausnehmung 53 zu führen. Die Führungsvorrichtung 51 ist in dem ersten Schutzhaubengehäuse 25 ausgebildet.

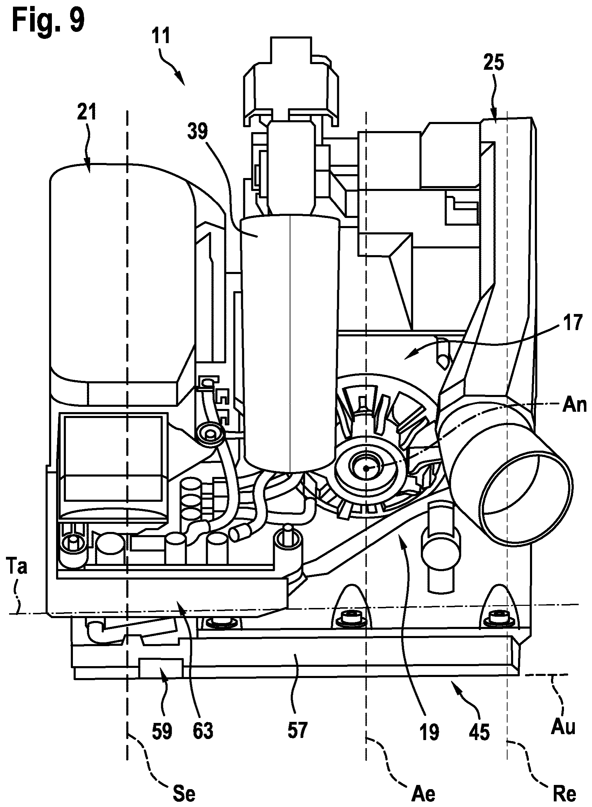

Die Tauchvorrichtung 47 bzw. die Tauchachse Ta weist ein Federelements 31 auf. Das Federelements 31 ist dazu vorgesehen, eine Rückstellbewegung der Tauchvorrichtung 47 bei einer Tauchbewegung zumindest des Kreissägeblattes 15 zu ermöglichen (Fig. 8, 9). Das Federelements 31 weist eine Schenkelfeder auf oder ist daraus gebildet. Das Federelements 31 ist an der Tauchachse Ta angeordnet. Die Tauchachse Ta ist dazu vorgesehen sein, das Kreissägeblatt 15 gegenüber der Auflageeinheit 45 drehbar zu lagern.

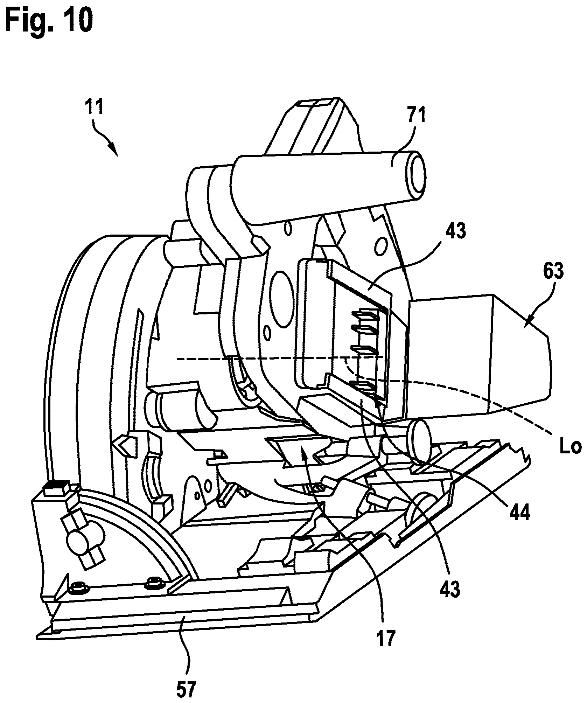

Ferner weist die Handwerkzeugmaschine 11 einen Zusatzhandgriff 71 (Fig. 10) auf, welcher dazu vorgesehen ist, einen Tauchbetriebszustand der Handwerkzeugmaschine 11 zu ermöglichen. Der Zusatzhandgriff 71 ist gegenüber dem Handgriffelement 39 in radialer Richtung der Tauchachse Ta beabstandet, wodurch beispielsweise eine erhöhte Kraft auf die Handwerkzeugmaschine 11 bzw. die Tauchvorrichtung 47 aufgebracht werden kann. Der Zusatzhandgriff 71 ist gegenüber dem Handriffelement 39 weiter außen liegende angeordnet.

Die Antriebseinheit 19 und der Akkupack 21 sind um die Tauchachse Ta beweglich gelagert.

Die Handwerkzeugmaschine 11 weist einen Schwerpunkt auf, welcher in zumindest einem Betriebszustand unterhalb einer das Kreissägeblatt 15 antreibenden Abtriebswelle 29 liegt. Der Schwerpunkt ist zwischen der Abtriebswelle 29 und der Auflageeinheit 45 angeordnet sein. Der Schwerpunkt ist zwischen der Auflageebene Au und einer sich parallel zu der Auflageebene Au erstreckenden Ebene ausgebildet, welche entlang der Abtriebswelle 29 angeordnet ist.

Die Auflageeinheit 45 weist eine Auflageplatte 57 auf. Die Auflageeinheit 45 ist dazu vorgesehen, auf ein Werkstück aufgelegt zu werden. Die Auflageeinheit 45 weist eine Führungseinheit 59 auf, welche dazu vorgesehen ist, die Handwerkzeugmaschine 11 zu führen. Die Führungseinheit 59 ist in zumindest einem Betriebszustand dazu vorgesehen, die Auflageeinheit 45 mittels Führungsschienen oder Führungslatten zu führen. Die Führungseinheit 59 ist dazu vorgesehen, eine Parallelführung zu bilden. Die Auflageeinheit 45 begrenzt eine Erstreckung der Handwerkzeugmaschine 11 in zumindest einer Richtung.

Die Handwerkzeugmaschine 11 weist eine Elektronikeinheit 63 auf. Die Elektronikeinheit 63 ist unmittelbar benachbart zu dem Akkupack 21 angeordnet. Die Elektronikeinheit 63 weist eine Bedien- und/oder Anzeigeeinheit 65 (HMI) auf. Die Elektronikeinheit 63 ist unterhalb der Abtriebswelle 29 angeordnet. Die Elektronikeinheit 63 ist beabstandet zum Akkupack 21 und zur Antriebseinheit 19 angeordnet.

Die Handwerkzeugmaschine 11 weist eine als Stirnradgetriebe ausgebildete zweite Getriebeeinheit 33 auf, welche eine Antriebsbewegung der Antriebseinheit 19 auf das Kreissägeblatt 15 überträgt (Fig. 5). Die zweite Getriebeeinheit 33 bildet eine zweite Getriebestufe. Bei Verwendung einer zweiten Getriebeeinheit 33 ist eine Zwischenwelle vorgesehen, welche eine Bewegung der ersten Getriebestufe von der Antriebseinheit 19 auf die zweite Getriebestufe überträgt.

## Patentansprüche

1. Handwerkzeugmaschine (11), insbesondere Handkreissäge, mit:
• einem lösbar aufnehmbaren Sägeblattaufnahmebereich (13), welcher in zumindest einem Betriebszustand der Handwerkzeugmaschine (11) eine Rotationsebene (Re) eines Kreissägeblattes (15) bildet;
• einer von einem Antriebsgehäuse (17) umgebenen Antriebseinheit (19); und
• einer an dem Antriebsgehäuse (17) angeordneten Energiespeichereinheit (21), insbesondere Akkupack (21), zur elektrischen Energieversorgung der Antriebseinheit (19);
**dadurch gekennzeichnet, dass** die Antriebseinheit (19) und die Energiespeichereinheit (21), insbesondere der Akkupack (21), parallel zu dem Sägeblattaufnahmebereich (13) bzw. der Rotationsebene (Re) angeordnet sind, und
**dadurch gekennzeichnet, dass** die Rotationsbewegung eines Antriebsmotors der Antriebseinheit (19) um eine Antriebsachse (An) auf eine Abtriebswelle (29) übertragen wird, die das Kreissägeblatt (15) trägt, und
**dadurch gekennzeichnet, dass** die Handwerkzeugmaschine (11) einen Schwerpunkt aufweist, der sich in einer Richtung orthogonal zu einer Auflagefläche (Au) einer auf einem Werkstück montierten Auflageneinheit (45) auf einer unteren Seite zwischen der Abtriebswelle (29) zum Antrieb des Kreissägeblattes (15) in mindestens einem Betriebszustand und der Auflagefläche (Au) befindet, und
**dadurch gekennzeichnet, dass** die Antriebsachse (An) in einem Winkel von mehr als 20° zur Auflagefläche (Au) geneigt ist, und
**dadurch gekennzeichnet, dass** die Energiespeichereinheit (21) in einem Energiespeichereinheit-Aufnahmebereich (41) des Antriebsgehäuses (17) untergebracht ist, indem die Energiespeichereinheit (21) entlang einer zur Antriebsachse (An) parallelen Richtung eingesetzt wird.

2. Handwerkzeugmaschine (11) nach Anspruch 1, **gekennzeichnet durch** eine als Winkelgetriebe (33) ausgebildete erste Getriebeeinheit (33), welche eine Antriebsbewegung der Antriebseinheit (19) auf das Kreissägeblatt (15) überträgt.

3. Handwerkzeugmaschine (11) nach Anspruch 2, **dadurch gekennzeichnet, dass** die erste Getriebeeinheit (33) ein Kronenradgetriebe, insbesondere mit einem Zylinderrad (35) und einem Kronenrad (37), oder ein Kegelradgetriebe, insbesondere mit einem Kegelrad und einem Kegelritzel, aufweist.

4. Handwerkzeugmaschine (11) nach einem der vorhergehenden Ansprüche, **dadurch gekennzeichnet, dass** die Energiespeichereinheit (21) gegenüber dem Sägeblattaufnahmebereich (13) bzw. der Rotationsebene (Re) weiter beabstandet ist als die Antriebseinheit (19).

5. Handwerkzeugmaschine (11) nach einem der vorhergehenden Ansprüche, ferner **gekennzeichnet durch** ein Handgriffelement (39), welcher zwischen der Antriebseinheit (19) und/oder dem Sägeblattaufnahmebereich (13) bzw. der Rotationsebene (Re) und der Energiespeichereinheit (21) angeordnet ist.

6. Handwerkzeugmaschine (11) nach einem der vorhergehenden Ansprüche, **dadurch gekennzeichnet, dass** eine senkrecht zum Sägeblattaufnahmebereich (13) bzw. der Rotationsebene (Re) angeordnete Lotlinie (Lo) die Energiespeichereinheit (21) und die Antriebseinheit (19) schneidet.

7. Handwerkzeugmaschine (11) nach einem der vorhergehenden Ansprüche, **dadurch gekennzeichnet, dass** das Antriebsgehäuse (17) einen Energiespeichereinheit-Aufnahmebereich (41), insbesondere einen Akku-Aufnahmebereich, aufweist, welcher derart angeordnet ist, dass der Energiespeichereinheit-Aufnahmebereich (41) in einer zum Handgriffelement (39) weisenden Richtung und/oder von einer zum Werkstück weisenden Richtung mit dem Antriebsgehäuse (17) verbindbar ist.

8. Handwerkzeugmaschine (11) nach einem der vorhergehenden Ansprüche, **dadurch gekennzeichnet, dass** die Antriebseinheit (19) gegenüber einer Auflageeinheit (45), insbesondere einer Auflageebene (Au) der Auflageeinheit (45), der Handwerkzeugmaschine (11) angewinkelt ist und insbesondere einen Winkel gegenüber der Auflageeinheit (45), insbesondere der Auflageebene (Au), bildet, welcher größer als 20°, insbesondere größer als 30°, vorzugsweise größer als 40°, ist und kleiner als 90°, insbesondere 70°, vorzugsweise 60°, ist.

9. Handwerkzeugmaschine (11) nach einem der vorhergehenden Ansprüche, **dadurch gekennzeichnet, dass** eine Elektronikeinheit (63) vorgesehen ist, und die Elektronikeinheit (63) eine Bedien- und/oder Anzeigeeinheit (65) (HMI) aufweist.

10. Handwerkzeugmaschine (11) nach einem der vorhergehenden Ansprüche, **dadurch gekennzeichnet, dass** eine zweite Getriebeeinheit (33), die als Stirnradgetriebe konfiguriert ist, vorgesehen ist und eine Drehbewegung des Antriebsmotors der Antriebseinheit (19) auf die Abtriebswelle (29) des Kreissägeblatts (15) überträgt.

11. Handwerkzeugmaschine (11) nach einem der vorhergehenden Ansprüche, **dadurch gekennzeichnet, dass** der Sägeblattaufnahmebereich (13) das Kreissägeblatt (15) lösbar aufnehmen kann.

12. Handwerkzeugmaschine (11) nach einem der vorhergehenden Ansprüche, **dadurch gekennzeichnet, dass** die Energiespeichereinheit (21) ein Akkupack (21) ist.
